# EUROPÄISCHE PATENTSCHRIFT

(11) **EP 2 901 224 B1**
(45) Veröffentlichungstag und Bekanntmachung des Hinweises auf die Patenterteilung: **15.12.2021**
(21) Anmeldenummer: 13756860.6
(22) Anmeldetag: 28.08.2013
(51) Int. Cl.: G05B 19/418

(54) **ANORDNUNG, UMFASSEND ZUMINDEST EIN FELDGERÄT, ZUMINDEST EINE DIESEM ZUGEORDNETE SENSOR- ODER SIGNALERFASSUNGSEINHEIT UND ZUMINDEST EINEN FUNKTIONSBLOCK**
ASSEMBLY, COMPRISING AT LEAST ONE FIELD DEVICE, AT LEAST ONE SENSOR UNIT OR SIGNAL DETECTION UNIT ASSOCIATED WITH THE AT LEAST ONE FIELD DEVICE, AND AT LEAST ONE FUNCTION BLOCK
ENSEMBLE, COMPRENANT AU MOINS UN APPAREIL DE TERRAIN, AU MOINS UNE UNITÉ À CAPTEUR OU UNE UNITÉ DE DÉTECTION DE SIGNAL AFFECTÉE À CE DERNIER, ET AU MOINS UN BLOC FONCTIONNEL

(30) Priorität: 28.09.2012 DE 102012109227
(43) Veröffentlichungstag der Anmeldung: 05.08.2015
(73) Patentinhaber: Endress+Hauser SE+Co. KG, 79689 Maulburg (DE)
(72) Erfinder: FRÜHAUF, Dietmar, 79539 Lörrach (DE); KONRAD, Michael, 87459 Pfronten (DE); BARET, Marc, F-68680 Kembs (FR)
(74) Vertreter: Andres, Angelika Maria
(86) Internationale Anmeldenummer: PCT/EP2013/067790
(87) Internationale Veröffentlichungsnummer: WO 2014/048664

(56) Entgegenhaltungen:
- EP-A2- 2 196 883
- None

## Beschreibung

Die Erfindung betrifft eine Anordnung, umfassend zumindest ein Feldgerät, zumindest eine diesem zugeordnete oder zuordenbare Sensor- oder Signalerfassungseinheit und zumindest einen Funktionsblock, ein Verfahren zum Überprüfen einer Messkette in einer Anlage, umfassend zumindest ein Feldgerät mit zumindest einer zugeordneten Sensor- oder Signalerfassungseinheit und zumindest einem Leitsystem, wobei das Leitsystem mit dem Feldgerät und der Sensor- oder Signalerfassungseinheit zum Empfang von Messwerten durch Leiter verbunden ist, sowie ein Verfahren zum Realisieren von SIL-Maßnahmen in einer Anlage, umfassend zumindest zwei Feldgeräte mit zumindest einer jeweiligen zugeordneten Sensor-oder Signalerfassungseinheit und zumindest zwei Funktionsblöcken.

Anordnungen mit zumindest einem Feldgerät und mit zumindest einer diesen zugeordneten Sensor- oder Signalerfassungseinheit sind dem Stand der Technik bekannt. Als Feldgeräte werden alle möglichen Arten von Geräten und Einrichtungen verstanden, die nahe am Prozess arbeiten, wie beispielsweise Sensoren, Aktoren, insbesondere Ventile, Rührer, Pumpen, Motoren, Gateways etc. Um deren Zustand zu ermitteln, sind den Feldgeräten üblicherweise Sensor- oder Signalerfassungseinheiten zugeordnet. In einer Anlage mit einem oder mehreren Feldgeräten ist es erforderlich, die jeweils erfassten Messwerte bzw. Signale permanent zu überprüfen, um Fehler frühzeitig zu erkennen. Hierzu ist es bekannt, von einem zentralen Ort aus, beispielsweise einer Leitwarte, die Messkette vom Feldgerät bis zur Leitwarte zu überprüfen. Ferner ist es bekannt, Anzeigemittel vor Ort vorzusehen und Messwerte an der Sensor- oder Signalerfassungseinheit zu simulieren. Das Vorsehen von Anzeigemitteln vor Ort an den jeweiligen Feldgeräten bedeutet einen hohen Aufwand und entsprechend hohe Kosten. Ferner ist ein Ablesen der jeweiligen Anzeigemittel ebenso wie der Sensor- oder Signalerfassungseinheit am Feldgerät selbst erforderlich, was bei einer schlechten Erreichbarkeit von Bedieneinrichtungen bzw. der Anzeigemittel der Feldgeräte bzw. der Sensor- oder Signalerfassungseinheit problematisch sein kann. Es besteht hier insbesondere die Gefahr von Bedienfehlern während und nach der Simulation der Messwerte an der Sensor- oder Signalerfassungseinheit. Bei den bekannten Anordnungen mangelt es ferner an der Möglichkeit eines Sendens von Rückinformationen von dem zentralen Punkt, wie der Leitwarte, an die Feldgeräte. Ein Ansprechen der Feldgeräte von der Leitwarte aus, beispielsweise bei auftretenden Fehlern, ist bei den bekannten Anordnungen und Anlagen nicht möglich bzw. nicht vorgesehen.

Aus der EP02196883A2 ist eine Möglichkeit zur Überprüfung eines Kommunikationskanals zwischen einem Feldgerät und einem Prozesssystem bekannt geworden. Über eine erste drahtlose Verbindung wird drahtlos ein Kommandosignal von einem Verifikations-Controller an eine erste Komponente des Prozesssystems übertragen. Anschließend wird drahtgebunden ein Antwortsignal von der ersten an eine zweite Komponente übertragen. Die zweite Komponente übermittelt dann über eine zweite drahtlose Verbindung ein Empfangssignal an den Verifikationscontroller, weicher den Kommunikationskanal anhand dieses Empfangssignals verifiziert.

Bekannt ist es ferner, Sicherheitsfunktionen bzw. sogenannte SIL-Maßnahmen, also Maßnahmen, um die Gefahren für Mensch, Umwelt und Sachwerte, die bei Fehlfunktionen von Prozessen und Systemen auftreten können, auf ein vertretbares Maß zu reduzieren, in ein Feldgerät zu integrieren. Eine nachträgliche Implementierung von SIL-Funktionalität in ein

Feldgerät ist nur mit erheblichem Entwicklungsaufwand möglich. In der IEC 61508, einer Norm, in der die funktionale Sicherheit sicherheitsbezogener elektrischer/elektronischer/programmierbarer elektronischer Systeme definiert ist, werden derzeit vier SIL (Safety Integrity Levels) definiert. Ein SIL wir durch die Komplexität des Feldgerätes, durch die Architektur der Messanordnung und durch die Wahrscheinlichkeit des Auftretens unerkannter Fehler, die die Sicherheitsfunktion beeinträchtigen, definiert. Je höher der Safety Integrity Level eines sicherheitsbezogenen Systems ist, desto geringer ist die Wahrscheinlichkeit, dass es die geforderten Sicherheitsfunktionen bei Bedarf nicht ausführt. In dieser Norm wird die Art der Risikobewertung ebenso wie Maßnahmen zur Auslegung entsprechender Sicherheitsfunktionen von Sensoren, Logikverarbeitung sowie insbesondere Aktoren bzgl. einer Fehlervermeidung von systematischen Fehlern und einer Fehlerbeherrschung von zufälligen Fehlern beschrieben.

Als nachteilig erweist es sich ferner, dass in den Feldgeräten große Ressourcen für die Integration von SIL-Maßnahmen benötigt und zur Verfügung gestellt werden müssen. Änderungen der einmal integrierten SIL-Maßnahmen erweisen sich als extrem aufwendig.

Der vorliegenden Erfindung liegt daher die Aufgabe zugrunde, eine Anordnung, umfassend zumindest ein Feldgerät mit zumindest einer diesem zugeordneten oder zuordenbaren Sensor-oder Signalerfassungseinheit und zumindest einem Funktionsblock vorzusehen, die die genannten Nachteile nicht aufweist. Ferner liegt ihr die Aufgabe zugrunde, ein Verfahren zum Realisieren von SIL-Maßnahmen in einer Anlage, die eine solche Anordnung umfasst, vorzusehen, bei dem eine Kommunikation mit dem Feldgerät bzw. zumindest einer diesem zugeordneten Sensor- oder Signalerfassungseinheit und/oder Funktionsblöcken des Feldgeräts auf einfache Art und Weise möglich ist.

Erfindungsgemäß wird eine Anordnung nach Anspruch 1 sowie ein Verfahren nach Anspruch 4 bereitgestellt.

Vorteilhafte Ausführungsbeispiele gehen aus den Unteransprüchen hervor.

Zur näheren Erläuterung der Erfindung werden im Folgenden Ausführungsbeispiele von dieser nähere anhand der Zeichnungen beschrieben. Diese zeigen in:
- Figur 1: eine Prinzipskizze einer erfindungsgemäßen Anordnung mit einem Feldgerät, einer Sensor- oder Signalerfassungseinheit mit mehreren Funktionsblöcken, einem Leitsystem sowie einer erfindungsgemäßen mobilen Rechnereinheit, und
- Figur 2: eine Prinzipskizze einer erfindungsgemäßen Anordnung mit mehreren Sensor- oder Signalerfassungseinheiten und einer erfindungsgemäßen mobilen Rechnereinheit in drahtloser Kommunikation miteinander.

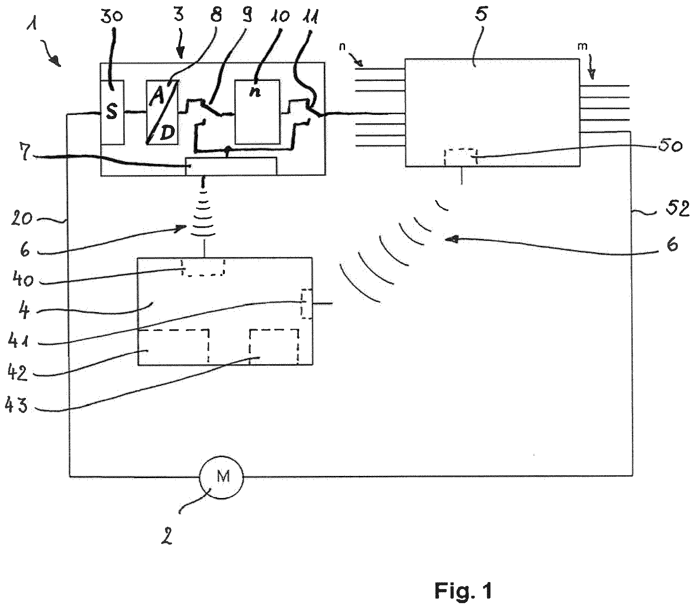

Figur 1 zeigt eine Prinzipskizze einer Anordnung 1 mit einem Feldgerät 2 in Form eines Motors bzw. Ventils bzw. Aktors, einer Sensor- und Signalerfassungseinheit 3, einer mobilen Rechnereinheit 4 und einem Leitsystem 5. Das Feldgerät 2 ist kabelverbunden mit der Sensor- und Signalerfassungseinheit 3 sowie dem Leitsystem 5. Die mobile Rechnereinheit 4 ist drahtlos sowohl mit der Sensor- oder Signalerfassungseinheit 3 als auch dem Leitsystem 5 verbunden. Diese drahtlose Verbindung ist jeweils mit dem Bezugszeichen 6 angedeutet. Sie kann bspw. eine Funk- oder Infrarotverbindung oder eine beliebige andere drahtlose Verbindung sein. Die Sensor- oder Signalerfassungseinheit 3 und das Leitsystem 5 sind über Kabel 51 miteinander verbunden. Das Leitsystem, insbesondere eine Leitwarte, weist eine Anzahl n von Eingängen und Anzahl m an Ausgängen auf. Die Eingänge sind oder können über jeweilige Kabel mit n Sensor- oder Signalerfassungseinheiten 3 verbunden sein, die Ausgänge des Leitsystems 5 mit jeweils m Feldgeräten 2. Die Sensor- oder Signalempfangseinheit 3 ist mit einer Sende-/Empfangseinheit 7 verbindbar. Die Sende-/Empfangseinheit 7 dient der drahtlosen Übermittlung von Daten und/oder Signalen an die bzw. von der mobilen Rechnereinheit 4. Insbesondere kann die Sende-/Empfangseinheit 7 eine Funkeinheit sein.

Die Sensor-/oder Signalerfassungseinheit 3 umfasst ein Sensorteil 30, das mit einem Analog-Digital-Wandler 8 verbunden ist zum Wandeln der Analogsignale, die von dem Feldgerät 2 über ein Kabel 20 empfangen werden, in digitale Signale. Der Analog-Digital-Wandler 8 kann mit der Sende-/Empfangseinheit 7 verbunden werden, um die digitalen Signale an die mobile Rechnereinheit 4 senden zu können. Zum Trennen des Sensorteils 30 und Analog-Digital-Wandlers 8 von Funktionsblöcken 10 ist ein Trenner oder Wechselschalter 9 vorgesehen. Die Sende-/Empfangseinheit 7 kann mit der Anzahl von Funktionsblöcken 10 verbunden werden. Ein Zugriff auf den Eingang der Funktionsblöcke 10 kann somit über die drahtlose Verbindung 6 erfolgen. Zum Trennen der Funktionsblöcke 10 vom Signalfluss durch diese hindurch ist ein zweiter Trenner oder Wechselschalter 11 vorgesehen, durch den dabei jedoch nicht die Verbindung zu der Sende-/Empfangseinheit 7 getrennt wird. Am Eingang und am Ausgang der Funktionsblöcke 10 können Wechselschalter vorgesehen werden, um ein Abschalten des gesamten Signalflusses beim Öffnen des Trenners 9 sowie ein Kurzschließen der Funktionsböcke 10 zu vermeiden. Somit kann die Sende-/ Empfangseinheit 7 die Signale des Sensorteils 30 bzw. die Signale des Analog-Digital-Wandlers 8 an die mobile Rechnereinheit 4 senden. Die Berechnung erfolgt in der mobilen Rechnereinheit 4, nicht in den Funktionsblöcken 10. Die Ergebnisse der Berechnung durch die mobile Rechnereinheit 4 werden als Stimuli an das Leitsystem 5 weitergegeben. Umgekehrt können Signale von der mobilen Rechnereinheit 4 an insbesondere die Funktionsblöcke 10 drahtlos über die Sende-/Empfangseinheit 7 gesandt werden. Zur drahtlosen Kommunikation weist auch die mobile Rechnereinheit 4 eine entsprechende Sende-/Empfangseinheit 40 auf. Sie kann ferner noch eine zweite Sende-/Empfangseinheit 41 aufweisen, um eine drahtlose Kommunikation mit dem Leitsystem zu ermöglichen. Alternativ kann die drahtlose Kommunikation mit sowohl dem Leitsystem 5 als auch der Sensor- oder Signalerfassungseinheit 3 über nur eine Sende-/Empfangseinheit 40 bzw. 41 erfolgen. Auch das Leitsystem 5 weist eine Sende-/Empfangseinheit 50 zur drahtlosen Kommunikation mit der mobilen Rechnereinheit 4 auf. Ferner ist das Leitsystem 5 mit der Sensor- oder Signalerfassungseinheit 3 über ein Kabel 51 verbunden und in Figur 1 mit dem Feldgerät auch über ein weiteres Kabel 52.

Das Leitsystem kann bspw. ein SPS-Modul in Kombination mit einer Rechnereinheit und ggfs. einem Internet-Verbindungsmodul bzw. WLAN-Modul umfassen, ferner die bereits genannte Infrarot-, Funk- oder sonstige Drahtlosverbindung. Durch das SPS-Modul ist eine SPSbasierte Steuerung möglich zum Ansteuern des zumindest einen Feldgerätes 2. Über die Rechnereinheit innerhalb des Leitsystems können Auswertungen und Berechnungen erfolgen und über das WLAN-Modul bzw. den Internet-Anschluss eine Verbindung zum Internet geschaffen werden, um hierüber eine Kontrollmöglichkeit des Leitsystems von extern vorsehen oder umgekehrt Informationen über das Internet in das Leitsystem einholen zu können.

Auch die mobile Rechnereinheit 4 kann ein WLAN-Modul bzw. einen Internetanschluss umfassen, um eine Zugriffsmöglichkeit oder Kommunikation über das Internet zu ermöglichen. Insbesondere kann über eine solche WLAN-Verbindung auch eine Kommunikation mit dem Leitsystem erfolgen. Als weiter vorteilhaft erweist es sich, die mobile Rechnereinheit 4 mit einer Speichereinheit 43 zu versehen, um die erfassten Messwerte sowie die errechneten Werte und Auswertungen zu Dokumentationszwecken speichern zu können. Ferner kann zumindest ein Anzeigemittel 42 vorgesehen werden, um die in der mobilen Rechnereinheit ermittelten Werte anzeigen zu können. Bspw. kann ein solches Anzeigemittel 42 in Form eines Anzeigeschirms und/oder einer digitalen Anzeige vorsehen werden.

Durch das Vorsehen der mobilen Rechnereinheit ist ein Überprüfen einer Signalübertragungs- oder Messkette von dem Feldgerät 2 bzw. der diesem zugeordneten Sensor- oder Signalerfassungseinheit bis hin zum Leitsystem 5 möglich. Hierbei erfasst zunächst die Sensor- oder Signalerfassungseinheit ein Signal des Feldgeräts 2 und überträgt dieses drahtlos nach Schließen des Trenners 9 über die Sende-/Empfangseinheit 7 an die mobile Rechnereinheit 4. Die mobile Rechnereinheit 4 berechnet aus den empfangenen Signalen einen theoretischen Messwert. Von dem Leitsystem 5 empfängt die mobile Rechnereinheit 4 den dort über das Kabel 51 empfangenen aktuellen Messwert des Feldgerätes 2 und vergleicht diesen mit dem theoretischen Messwert, der sich aufgrund der Berechnung ergeben hat. Aus dem Vergleich des theoretischen Messwerts und des aktuellen Messwerts, den das Leitsystem 5 empfangen hat, können Rückschlüsse auf Fehler in der Signalübertragungs- bzw. Messkette zwischen der Sensor- oder Signalerfassungseinheit 3 und dem Leitsystem 5 gezogen werden, wobei auch alle Elemente der Signalübertragungs- bzw. Messkette, die seitens des Leitsystems 5 vorgesehen sind, hier mit in die Signalübertragungs- bzw. Messkette einbezogen und entsprechend bei der Fehlerüberwachung berücksichtigt werden können.

Für SIL-Maßnahmen werden über die Sende-/Empfangseinheit 7 Signale von den Funktionsblöcken 10 an die mobile Rechnereinheit 4 drahtlos übertragen. Die mobile Rechnereinheit 4 ermittelt hieraus einen Istwert und vergleicht diesen mit einem vorgegebenen Sollwert, der entweder der mobilen Rechnereinheit 4 vorab vorgegeben wird, bspw. von dem Leitsystem 5, oder in einem Speicher der mobilen Rechnereinheit 4 als Sollwert abgelegt ist. Die mobile Rechnereinheit 4 übernimmt somit die sonst in das Feldgerät implementierte SIL-Funktionalität, so dass dieser Aufwand seitens des Feldgerätes 2 entfallen kann. Eine SIL-Funktionalität kann somit auch bei bestehenden Feldgeräten nachgerüstet werden, wobei diese lediglich mit einer Sende-/Empfangseinheit 7 zum drahtlosen Kommunizieren mit der mobilen Rechnereinheit 4 versehen werden.

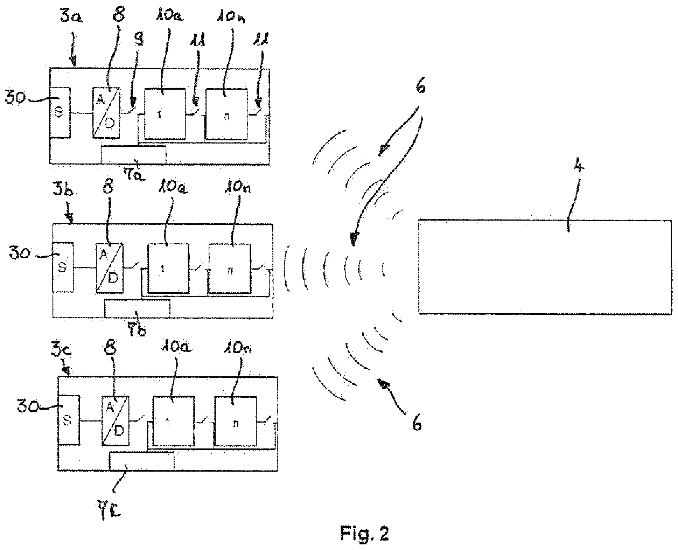

Wie Figur 2 zu entnehmen ist, kann eine mobile Rechnereinheit 4 in der Reichweite mehrerer Feldgeräte und entsprechend mehrerer Sensor- oder Signalerfassungseinheiten 3a, 3b, 3c angeordnet werden. Jede der Einheiten ist mit einer jeweiligen Sende-Empfangseinheit 7a, 7b, 7c versehen, um eine drahtlose Kommunikation mit der mobilen Rechnereinheit 4 zu ermöglichen.

Jede der Sensor- oder Signalerfassungseinheiten 3a, 3b, 3c umfasst mehrere Funktionsblöcke 10a bis 10n. Dies ist ebenfalls in Figur 2 angedeutet. Die Signale der einzelnen Funktionsblöcke 10a bis 10n werden über die jeweiligen Sende-/ Empfangseinheiten 7a, 7b, 7c drahtlos an die mobile Rechnereinheit 4 übertragen. In der mobilen Rechnereinheit 4 erfolgt die Berechnung der Istwerte sowie der Sollwert-IstwertVergleich im Hinblick auf die Funktionsblöcke. Ebenfalls kann über die mobile Rechnereinheit 4 ein Eingriff bei Erkennen eines Fehlers erfolgen, also entweder korrigierend eingegriffen oder das jeweilige Feldgerät 2 vollständig abgeschaltet werden, oder in einen sicheren Zustand gebracht werden. Da das Vorsehen der mobilen Rechnereinheit 4 dem Realisieren von SIL-Maßnahmen im Hinblick auf das Feldgerät 2 dient, ist die Anordnung 1 dahingehend ausgelegt, dass eine permanente Kommunikation zwischen dem Feldgerät 2 und der mobilen Rechnereinheit 4 vorgesehen wird. Ein Abbruch der Kommunikation führt insbesondere zur Ausgabe eines Fehlersignals. Ggf. kann in diesem Falle das Feldgerät in einen vorbestimmten sicheren Zustand gehen. Wird die mobile Rechnereinheit 4 entfernt, kann ebenfalls vorgesehen werden, dass alle mit dieser eigentlich in Kommunikation stehenden Feldgeräte 2, die von der mobilen Rechnereinheit 4 angesprochen werden, in einen definierten Zustand gehen, der als abgesichert gilt.

Anstelle von Trennschaltern, die in Fig. 2 zwischen den Funktionsblöcken 10a bis n gezeigt sind, können zwischen dn Funktionsblöcken auch Wechselschalter vorgesehen sein, wie in Fig. 1 dargestellt ist, so dass beispielsweise ein i+1-ter Block (0<1<n) wahlweise an den i-ten Block oder die Empfangseinheit 7 angeschlossen sein kann.

Anstelle der einen in Figur 2 gezeigten mobilen Rechnereinheit 4 können auch mehrere mobile Rechnereinheiten 4 vorgesehen werden und zum Einsatz kommen in Verbindung mit mehreren Feldgeräten 2. Hierdurch können auch die von der jeweiligen mobilen Rechnereinheit 4 ermittelten Werte zusätzlich verifiziert bzw. Redundanzen geschaffen werden, um die Sicherheit weiter zu erhöhen.

Im Bereich der jeweiligen Sende-/Empfangseinheiten 7, 7a, 7b, 7c, 40, 41, 50 können jeweils Einrichtungen zum Verschlüsseln der zu sendenden Daten und Signale vorgesehen werden. Über solche Verschlüsselungseinrichtungen ist es möglich, die Manipulationssicherheit des Feldgeräts bzw. der Feldgeräte 2 deutlich zu erhöhen.

Um die Sensor- oder Signalerfassungseinheiten 3a, 3b, 3c und/oder den A/D-Wandler 8 im Hinblick auf ihre Funktionsfähigkeit zu überprüfen, kann am Ausgang des Feldgeräts 2 ein Stimulus erzeugt und die Reaktion des Leitsystems 5 ausgewertet werden. Hierbei ist vorteilhaft das Verhalten der Messstrecke vom Feldgerät 2 zum Leitsystem 5 bekannt, so dass die Antwort der Sensor- oder Signalerfassungseinheiten 3a, 3b, 3c vorhergesagt werden kann. Um nun die Messgenauigkeit der Sensor- oder Signalerfassungseinheiten 3a, 3b, 3c zu überprüfen, wird der vorhergesagte Wert mit dem gemessenen Wert verglichen. Die Höhe der sich ggf. ergebenden Differenz dieser Werte ist ein Maß für die Messgenauigkeit der Sensor-oder Signalerfassungseinheiten 3a, 3b, 3c.

Neben dem Bestimmen der Messgenauigkeit der Sensor- oder Signalerfassungseinheiten kann durch das Aufgeben des Stimulus auch das Verhalten der gesamten Messstrecke überprüft und ggf. korrigierend eingegriffen oder ggf. Korrekturfaktoren bei Berechnungen berücksichtigt werden, wenn sich Abweichungen von vorgebbaren Sollwerten ergeben.

Bei Vorsehen einer Speichereinheit in der mobilen Rechnereinheit 4 können die ermittelten bzw. berechneten Werte gespeichert und für statistische Zwecke sowie für nachfolgende Messungen, Berechnungen und Auswertungen als Referenzwerte zur Verfügung stehen. Neben den im Vorstehenden beschriebenen und in den Figuren gezeigten Ausführungsvarianten von Anordnungen mit zumindest einem Feldgerät, dem zumindest eine Sensor- oder Signalerfassungseinheit und zumindest ein Funktionsblock zugeordnet ist, können noch zahlreiche weitere vorgesehen werden, bei denen jeweils zumindest eine mobile Rechnereinheit zur Durchführung von Berechnungen und/oder Auswertungen vorgesehen ist und die Sensor- oder Signalerfassungseinheit und die mobile Rechnereinheit jeweils zumindest eine Einrichtung zum drahtlosen Senden und/oder Empfangen von Daten und/oder Signalen zur drahtlosen Kommunikation miteinander umfassen.

### Bezugszeichenliste

- 1: Anordnung
- 2: Feldgerät (Motor/Ventil/Aktor)
- 3: Sensor- oder Signalerfassungseinheit
- 3a: Sensor- oder Signalerfassungseinheit
- 3b: Sensor- oder Signalerfassungseinheit
- 3c: Sensor- oder Signalerfassungseinheit
- 4: mobile Rechnereinheit
- 5: Leitsystem
- 6: drahtlose Verbindung
- 7: Sende-/Empfangseinheit
- 7a: Sende-/Empfangseinheit
- 7b: Sende-/Empfangseinheit
- 7c: Sende-/Empfangseinheit
- 8: A/D-Wandler (Analog/Digital-Wandler)
- 9: Trenner
- 10: Funktionsblock
- 10a: Funktionsblock
- 10n: Funktionsblock
- 11: Trenner
- 20: Kabel
- 30: Sensorteil
- 40: Sende-/Empfangseinheit
- 41: Sende-/Empfangseinheit
- 42: Anzeigemittel
- 43: Speichereinheit
- 50: Sende-/Empfangseinheit
- 51: Kabel
- 52: Kabel

## Patentansprüche

1. Anordnung (1) zum Realisieren von Safety-Integrity-Level-Maßnahmen in einer Anlage, umfassend zumindest ein Feldgerät (2), zumindest eine diesem zugeordnete oder zuordenbare Sensor- oder Signalerfassungseinheit (3,3a,3b,3c) mit einem Sensorteil (30) und zumindest einen Funktionsblock (10,10a,10n),
wobei zumindest eine mobile Rechnereinheit (4) zur Durchführung von Berechnungen und/oder Auswertungen vorgesehen ist,
wobei die zumindest eine Sensor- oder Signalerfassungseinheit (3,3a,3b,3c) und die zumindest eine mobile Rechnereinheit (4) zur drahtlosen Kommunikation miteinander jeweils zumindest eine Einrichtung (7,7a,7b,7c,40) zum drahtlosen Senden und Empfangen von Daten und/oder Signalen umfassen,
wobei die Einrichtung (40) oder eine weitere Einrichtung (41) der mobilen Recheneinheit zur drahtlosen Kommunikation mit einem Leitsystem (5) dient, welches Leitsystem (5) kabelgebunden aktuelle Messwerte des Feldgeräts empfängt und drahtlos an die mobile Rechnereinheit (4) sendet,
wobei die Einrichtung (7,7a,7b,7c) zum drahtlosen Senden und Empfangen von Daten und/oder Signalen der Sensor- oder Signalerfassungseinheit (3,3a,3b,3c) mit dem zumindest einem Funktionsblock (10,10a,10n) und/oder dem Sensorteil (30) der Sensor-oder Signalerfassungseinheit (3,3a,3b,3c) verbindbar oder verbunden ist zum Vorsehen eines drahtlosen Zugriffs der mobilen Rechnereinheit (4) auf den Funktionsblock (10,10a,10n) und/oder den Sensorteil (30),
**dadurch gekennzeichnet, dass**
die mobile Recheneinheit (4) dazu ausgestaltet ist, aus den Daten und/oder Signalen der Sensor- oder Signalerfassungseinheit (3,3a,3b,3c) einen theoretischen Messwert oder aus den Daten und/oder Signalen der Funktionsblöcke einen Ist-Wert zu berechnen, den theoretischen Messwert oder den Istwert mit dem aktuellen Messwert oder einem Sollwert zu vergleichen und über den Vergleich Rückschlüsse auf eventuelle Fehler in der Signalübertragungs- oder Messkette festzustellen.

2. Anordnung (1) nach Anspruch 1,
**dadurch gekennzeichnet, dass**
die mobile Rechnereinheit (4) zumindest ein Anzeigemittel (42) und/oder zumindest ein Speichermittel (43) und/oder zumindest eine drahtlose Internet-Verbindungseinrichtung umfasst.

3. Anordnung (1) nach einem der vorstehenden Ansprüche,
**dadurch gekennzeichnet, dass**
eine verschlüsselte Daten- und/oder Signalübertragung vorgesehen ist.

4. Verfahren zum Realisieren von Safety-Integrity-Level-Maßnahmen in einer Anlage, umfassend zumindest zwei Feldgeräte (2) mit zumindest einer jeweiligen zugeordneten Sensor- oder Signalerfassungseinheit (3a,3b,3c) und zumindest zwei Funktionsblöcken (10,10n),
**dadurch gekennzeichnet, dass**
eine Einrichtung (7, 7a, 7b, 7c, 40) zum drahtlosen Senden und Empfangen Daten und/oder Signale der Sensor- oder Signalerfassungseinheit (3,3a,3b,3c) oder der Funktionsblöcke (10,10n) an eine mobile Rechnereinheit (4) zur Durchführung von Berechnungen und/oder Auswertungen drahtlos überträgt wobei die Einrichtung (40) oder eine weitere Einrichtung (41) der mobilen Rechnereinehit zur drahtlosen Kommunikation von einem Leitsystem (5) kabelgebunden aktuelle Messwerte des Feldgeräts empfängt und drahtlos an die mobile Rechnereinheit (4) sendet und die mobile Rechnereinheit (4) aus den Daten und/oder Signalen der Sensor- oder Signalerfassungseinheit (3, 3a, 3b, 3c) oder der Funktionsblöcke (10, 10n) einen theoretischen Messwert oder einen Istwert berechnet, mit einem von einem Leitsystem (5) kabelgebunden (51) empfangenen aktuellen Messwert oder einem vorgebbaren oder vorgegebenen Sollwert vergleicht und über den Vergleich Rückschlüsse auf eventuelle Fehler in der Signalübertragungs- oder Messkette feststellt.

5. Verfahren nach Anspruch 4,
**dadurch gekennzeichnet, dass**
mehrere Feldgeräte (2) in Reichweite der mobilen Rechnereinheit (4) angeordnet werden und SIL-Funktionalität über die mobile Rechnereinheit (4) erhalten.

## Claims

1. Arrangement (1) designed to implement safety integrity level measures in an installation, comprising at least a field device (2), at least a sensor unit or a signal detection unit (3, 3a, 3b, 3c) which is associated with, or can be associated with, said field device and which has a sensor part (30) and at least a function block (10, 10a, 10n),
wherein at least a mobile computer unit (4) is provided to perform calculations and/or analyses,
wherein, for the purpose of wireless intercommunication, the at least one sensor unit or signal detection unit (3, 3a, 3b, 3c) and the at least one mobile computer unit (4) each comprise at least one apparatus (7, 7a, 7b, 7c, 40) for the wireless transmission and reception of data and/or signals,
wherein the apparatus (40) or another apparatus (41) of the mobile computer unit is used for wireless communication with a control system (5), wherein said control system (5) receives current measured values of the field device via a cable connection and transmits said values wirelessly to the mobile computer unit (4),
wherein the apparatus (7, 7a, 7b, 7c) designed for the wireless transmission and reception of data and/or signals of the sensor unit or the signal detection unit (3, 3a, 3b, 3c) can be connected to or is connected to the at least one function block (10, 10a, 10n) and/or to the sensor part (30) of the sensor unit or the signal detection unit (3, 3a, 3b, 3c) in order to provide wireless access for the mobile computer unit (4) to the function block (10, 10a, 10n) and/or to the sensor part (30),
**characterized in that**
the mobile computer unit (4) is designed to calculate a theoretical measured value from the data and/or the signals of the sensor unit or the signal detection unit (3, 3a, 3b, 3c), or to calculate an actual value from the data and/or the signals of the function blocks, to compare the theoretical measured value or the actual value to the actual measured value or to a target value, and to draw conclusions about potential errors in the signal transmission or measuring chain on the basis of the comparison.

2. Arrangement (1) as claimed in Claim 1,
**characterized in that**
the mobile computer unit (4) comprises at least a means of display (42) and/or at least a means of storage (43) and/or at least a wireless Internet connection unit.

3. Arrangement (1) as claimed in one of the previous claims,
**characterized in that**
encrypted data and/or signal transmission is provided.

4. Procedure designed to implement safety integrity level measures in an installation, comprising at least two field devices (2) with at least one associated sensor unit or signal detection unit (3a, 3b, 3c) and at least two function blocks (10, 10n),
**characterized in that** an apparatus (7, 7a, 7b, 7c, 40) designed for wireless transmission and reception sends data and/or signals of the sensor unit or signal detection unit (3, 3a, 3b, 3c) or function blocks (10, 10n) to a mobile computer unit (4) to wirelessly perform calculations and/or analyses, wherein the apparatus (40) or another apparatus (41) of the mobile computer unit for wireless communication receives current values of the field device from a control system (5) via a cable connection and sends them wirelessly to the mobile computer unit (4), and wherein the mobile computer unit (4) calculates a theoretical measured value or an actual value from the data and/or signals of the sensor unit or the signal detection unit (3, 3a, 3b, 3c) or the function blocks (10, 10n), compares it to an actual measured value received via a cable connection (51) from a control system (5) or to a predefinable or predefined target value, and draws conclusions about potential errors in the signal transmission or measuring chain via the comparison.

5. Procedure as claimed in Claim 4,
**characterized in that**
multiple field devices (2) are arranged within reach of the mobile computer unit (4) and receive the SIL functionality via the mobile computer unit (4).

## Revendications

1. Arrangement (1) destiné à la réalisation de mesures de niveau d'intégrité de sécurité dans une installation, comprenant au moins un appareil de terrain (2), au moins une unité de capteur ou de détection de signaux (3, 3a, 3b, 3c) associée ou pouvant être associée à celui-ci et présentant une partie capteur (30) et au moins un bloc de fonctions (10, 10a, 10n),
arrangement pour lequel il est prévu au moins une unité de calcul mobile (4) destinée à effectuer des calculs et/ou des évaluations,
l'au moins une unité de capteur ou de détection de signaux (3, 3a, 3b, 3c) et l'au moins une unité de calcul mobile (4) comprenant, pour la communication sans fil entre elles, chacune au moins un dispositif (7, 7a, 7b, 7c, 40) destiné à l'émission et à la réception sans fil de données et/ou de signaux,
le dispositif (40) ou un autre dispositif (41) de l'unité de calcul mobile servant à la communication sans fil avec un système numérique de contrôle commande (5), lequel système numérique de contrôle commande (5) reçoit via une liaison filaire les valeurs mesurées actuelles de l'appareil de terrain et les transmet via une liaison sans fil à l'unité de calcul mobile (4),
le dispositif (7, 7a, 7b, 7c) destiné à la transmission et à la réception sans fil de données et/ou de signaux de l'unité de capteur ou de détection de signaux (3, 3a, 3b, 3c) pouvant être connecté ou étant connecté à au moins un bloc de fonctions (10, 10a, 10n) et/ou à la partie capteur (30) de l'unité de capteur ou de détection de signaux (3, 3a, 3b, 3c) pour fournir un accès sans fil de l'unité de calcul mobile (4) au bloc de fonctions (10, 10a, 10n) et/ou à la partie capteur (30),
**caractérisé**
**en ce que** l'unité de calcul mobile (4) est conçue pour calculer une valeur de mesure théorique à partir des données et/ou des signaux de l'unité de capteur ou de détection de signaux (3, 3a, 3b, 3c), ou une valeur réelle à partir des données et/ou des signaux des blocs de fonctions, pour comparer la valeur de mesure théorique ou la valeur réelle à la valeur de mesure actuelle ou à une valeur de consigne, et pour tirer des conclusions sur d'éventuelles erreurs dans la chaîne de transmission de signaux ou de mesure par le biais de la comparaison.

2. Arrangement (1) selon la revendication 1,
**caractérisé**
**en ce que** l'unité de calcul mobile (4) comprend au moins un moyen d'affichage (42) et/ou au moins un moyen de stockage (43) et/ou au moins un équipement de connexion Internet sans fil.

3. Arrangement (1) selon l'une des revendications précédentes,
**caractérisé**
**en ce qu'**une transmission cryptée de données et/ou de signaux est prévue.

4. Procédé destiné à la réalisation de mesures de niveau d'intégrité de sécurité dans une installation, comprenant au moins deux appareils de terrain (2) avec au moins une unité de capteur ou de détection de signaux (3a, 3b, 3c) associée et au moins deux blocs de fonctions (10, 10n),
**caractérisé en ce qu'**un dispositif (7, 7a, 7b, 7c, 40) destiné à l'émission et à la réception sans fil transmet sans fil des données et/ou des signaux de l'unité de capteur ou de détection de signaux (3, 3a, 3b, 3c) ou des blocs de fonctions (10, 10n) à une unité de calcul mobile (4) en vue de la réalisation de calculs et/ou d'évaluations, le dispositif (40) ou un autre dispositif (41) de l'unité de calcul mobile, lequel dispositif est destiné à la communication sans fil, recevant via une liaison filaire des valeurs de mesure actuelles de l'appareil de terrain d'un système numérique de contrôle de commande (5) et les transmettant via une liaison sans fil à l'unité de calcul mobile (4), et l'unité de calcul mobile (4) calculant une valeur de mesure théorique ou une valeur réelle à partir des données et/ou des signaux de l'unité de capteur ou de détection de signaux (3, 3a, 3b, 3c) ou des blocs de fonctions (10, 10n), la compare à une valeur de mesure actuelle reçue via une liaison filaire (51) d'un système numérique de contrôle commande (5) ou à une valeur de consigne prédéfinissable ou prédéfinie, et tire des conclusions de la comparaison sur d'éventuelles erreurs dans la chaîne de transmission de signaux ou de mesure.

5. Procédé selon la revendication 4,
**caractérisé**
**en ce que** plusieurs appareils de terrain (2) sont disposés à portée de l'unité de calcul mobile (4) et reçoivent la fonctionnalité SIL via l'unité de calcul mobile (4).
